Europäisches Patentamt

European Patent Office

Office européen des brevets

(19)

(11) Veröffentlichungsnummer: **0 042 608**
**B1**

(12)

# EUROPÄISCHE PATENTSCHRIFT

(45) Veröffentlichungstag der Patentschrift:
03.10.84

(51) Int. Cl.³: **B 62 D 49/06,** B 60 P 1/50

(21) Anmeldenummer: **81104744.8**

(22) Anmeldetag: **20.06.81**

(54) **Abstützeinrichtung für ein von einem Traktor abbaubares Arbeitsgerät.**

(30) Priorität: **23.06.80 US 161840**

(43) Veröffentlichungstag der Anmeldung:
**30.12.81 Patentblatt 81/52**

(45) Bekanntmachung des Hinweises auf die Patenterteilung:
**03.10.84 Patentblatt 84/40**

(84) Benannte Vertragsstaaten:
**AT DE FR GB**

(56) Entgegenhaltungen:
**DE - A - 2 537 521**
**DE - A - 2 541 697**

(73) Patentinhaber: **DEERE & COMPANY, 1 John Deere Road, Moline Illinois 61265 (US)**

(72) Erfinder: **Friesen, Henry (NMN), 3057 St. Patrick Ave., Niagara Falls Ontario, L2J 2M (CA)**
Erfinder: **Trott, Clarence Robert, 23 Woodgate Drive, Welland Ontario, L3C 3H5 (CA)**

(74) Vertreter: **Gramm, Werner, Prof. Dipl.-Ing., Patentanwälte Gramm + Lins Theodor-Heuss-Strasse 2, D-3300 Braunschweig (DE)**

## Beschreibung

Die Erfindung betrifft eine Abstützeinrichtung für ein von einem Traktor abbaubares Arbeitsgerät – z.B. eine Schaufel mit Hubarmen –, das ein auf dem Boden abstellbares Geräteteil sowie zumindest einen mit diesem verbundenen Hubarm aufweist, der sich mit einem ansteigenden Rahmenabschnitt vom Geräteteil nach hinten und oben und mit einem hochliegenden Rahmenabschnitt über den Boden erstreckt und bei vom Traktor abgebautem und auf dem Boden abgestellten Arbeitsgerät von der Abstützeinrichtung im Abstand über dem Boden gehalten wird, wobei die Abstützeinrichtung noch folgende Merkmale aufweist:

– Im Bereich des hochliegenden Rahmenabschnittes ist eine Schiebeführung für eine Stützstrebe vorgesehen;

– die Stützstrebe ist mit ihrem oberen Ende über ein Führungsteil so in der Schiebeführung festgelegt, dass sie hochgeschoben und in eine eingefahrene Stellung verschwenkt werden kann, in der das untere Ende der Stützstrebe vom Boden frei ist, oder aber dass die Stützstrebe nach unten geschoben und nach hinten in eine Abstützposition verschwenkt werden kann, in der das untere Ende der Stützstrebe in rückwärtigem Abstand von dem genannten Geräteteil auf dem Boden aufliegt;

– es ist eine lösbare Verriegelungseinrichtung zur Verriegelung der Stützstrebe in einer der beiden genannten Stellungen vorgesehen.

Eine derartige Ausführungsform lässt sich der DE-A1-25 37 521 entnehmen. Hier ist die Schiebeführung für die Stützstrebe durch einen angenähert horizontal liegenden, nach vorn offenen rohrförmigen Arm eines Hauptrahmens gebildet. Die Stützstrebe ist mit ihrem oberen Ende an einem Gleitstück angelenkt, das in der Schiebeführung längsverschieblich geführt ist. Die Stützstrebe selbst besteht aus einem oberen, an dem Gleitstück angelenkten rohrförmigen Stützteil, in dem teleskopartig ein unteres Stützteil geführt ist, das an seinem unteren Ende eine Stützplatte trägt und in seiner ausgezogenen bzw. eingeschobenen Stellung gegenüber dem oberen Stützteil durch eine Klemmschraube fixiert wird. In Arbeitsstellung liegt jede Stützstrebe gegen einen an dem rohrförmigen Arm des Hauptrahmens befestigten Anschlag an, der mit einer Nase formschlüssig in eine Ausnehmung der Stützstrebe eingreift und diese dadurch verriegelt.

Diese vorbekannte Abstützeinrichtung lässt sich somit nur dann realisieren, wenn angenähert horizontal liegende rohrförmige Arme zur Aufnahme der Stützstreben vorgesehen sind. Dies ist aber üblicherweise nicht der Fall. Die zusätzliche Anordnung derartiger Arme bedeutet aber einen enormen konstruktiven Aufwand. Nachteilig ist ferner, dass getrennte Einrichtungen für die Verriegelung der Stützstrebe in Ruhestellung sowie für die Fixierung der beiden Stützteile aneinander vorgesehen sind. In Ruhestellung ist dadurch insbesondere während der Fahrt des Fahrzeuges möglich, dass sich die genannte Klemmschraube löst und unter Umständen verloren geht. Insgesamt ist die Handhabung der bekannten Stützstrebe aufwendig, zumal die gesamte Stützstrebe um ihren oberen Aufhängepunkt um über 90° bis in die Horizontale verschwenkt werden muss, um aus dieser Stellung in die rohrförmigen Arme eingeschoben werden zu können.

Der Erfindung liegt die Aufgabe zugrunde, die eingangs erläuterte Abstützeinrichtung hinsichtlich ihrer Konstruktion sowie ihrer Handhabung zu vereinfachen.

Diese Aufgabe wird gemäss der Erfindung dadurch gelöst, dass die Schiebeführung an dem ansteigenden Rahmenabschnitt des Hubarmes neben dessen hochliegenden Rahmenabschnitt sitzt, und die Stützstrebe nach vorn zur Anlage an den ansteigenden Rahmenabschnitt in die eingefahrene Stellung veschwenkbar bzw. in der Schiebeführung nach unten verschiebbar und von dem ansteigenden Rahmenabschnitt wegschwenkbar ist, wobei die Verriegelungseinrichtung einen herausziehbaren Verriegelungszapfen aufweist, der bei eingefahrener Stellung der Stützstrebe eine Steckverbindung zwischen Stützstrebe und unterem Abschnitt der Schiebeführung und bei Abstützstellung der Stützstrebe zwischen dieser und dem ansteigenden Rahmenabschnitt herstellt.

Die erfindungsgemässe Abstützeinrichtung ist also ständig fest mit dem Arbeitsgerät verbunden. Die Stützstrebe ist einteilig ausgebildet, so dass die Manipulation mehrerer Abstützteile und/oder der Verlust von Teilen entfällt. Durch die nach oben ansteigende Schiebeführung kann die Abstützeinrichtung verhältnismässig lang ausgebildet werden, da beim Einfahren der Stützstrebe ein wesentlicher Teil ihrer Länge durch Hochschieben kompensiert wird, bevor die Stützstrebe nach vorn gegen den ansteigenden Rahmenabschnitt verschwenkt wird. Die Verriegelungseinrichtung kann sehr einfach ausgebildet sein und dient zur Verriegelung in den beiden genannten Stellungen der Stützstrebe. Sie muss daher in jedem Fall benutzt werden und lässt sich dadurch praktisch nicht verlieren.

In einer vorteilhaften Weiterbildung der erfindungsgemässen Abstützeinrichtung kann eine zusätzliche lösbare Verriegelungseinrichtung vorgesehen sein, die ein Verschwenken der Stützstrebe aus ihrer eingefahrenen Stellung so lange verhindert, bis die Stützstrebe über eine vorbestimmte Länge in der Schiebeführung nach unten geschoben ist. Dadurch wird ein plötzliches, unerwünschtes Zurückschwenken der Stützstrebe und damit auch eine etwaige Verletzung einer Bedienungsperson verhindert, die gerade die Stellung der Stützstrebe verändern will.

Dabei ist es vorteilhaft, wenn die Schiebeführung einen Boden aufweist, der in seinem unteren Abschnitt mit einem Ausschnitt versehen ist, und dass die Stützstrebe eine Nase aufweist, die beim Herunterschieben der Stützstrebe am Boden der Schiebeführung bis zum Erreichen des Auschnittes entlang gleitet, durch diesen Ausschnitt nach unten austritt und so die Verschwenkung der Stützstrebe nach hinten ermöglicht. Alle die zusätzliche lösbare Verriegelungseinrichtung bildenden Bauteile sind somit fest mit der Abstützeinrichtung verbunden, so dass auch insoweit ein Verlieren von Teilen ausgeschlossen ist.

Weitere Merkmale und Vorteile der Erfindung sind Gegenstand der Unteransprüche und werden anhand eines Ausführungsbeispieles erläutert.

Die neue Abstützeinrichtung weist einen besonders einfachen Aufbau auf und kann in einfacher Weise an bereits vorhanden Arbeitsgeräte angebracht werden.

In der Zeichnung ist eine als Beispiel dienende Ausführungsform der Erfindung dargestellt.

Es zeigen:

Figur 1 in Seitenansicht einen typischen Radlader mit einer Abstützeinrichtung, die in ausgezogenen Linien in ihrer eingefahrenen Stellung und in strichpunktierten Linien in ihrer Abstützstellung gezeigt ist;

Figur 2 einen Ausschnitt aus Figur 1 in vergrössertem Massstab;

Figur 3 eine Darstellung gemäss Figur 2, bei der sich die Abstützeinrichtung jedoch in ihrer Abstützstellung befindet;

Figur 4 einen Schnitt gemäss der Linie IV–IV in Fig. 2;

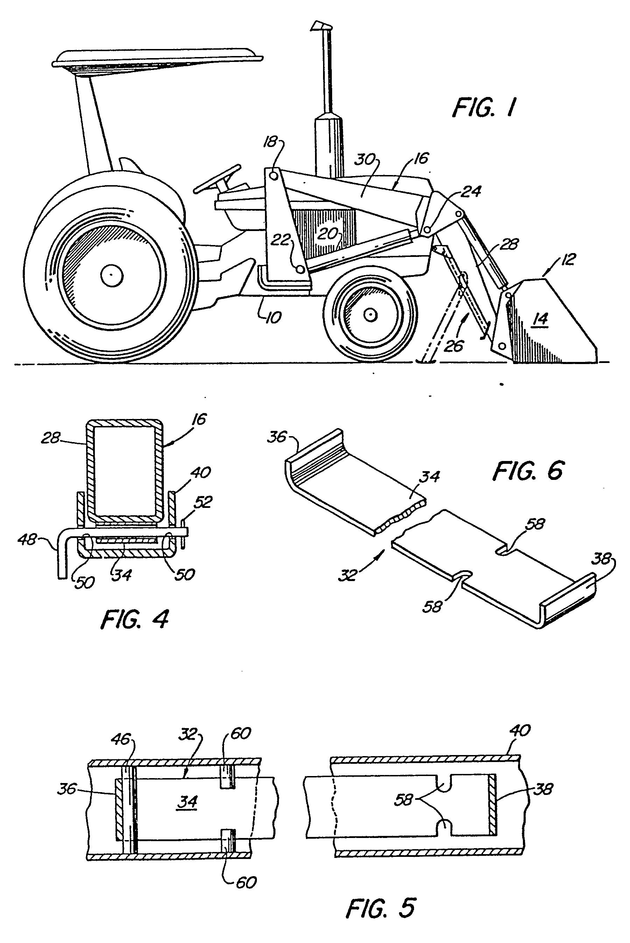

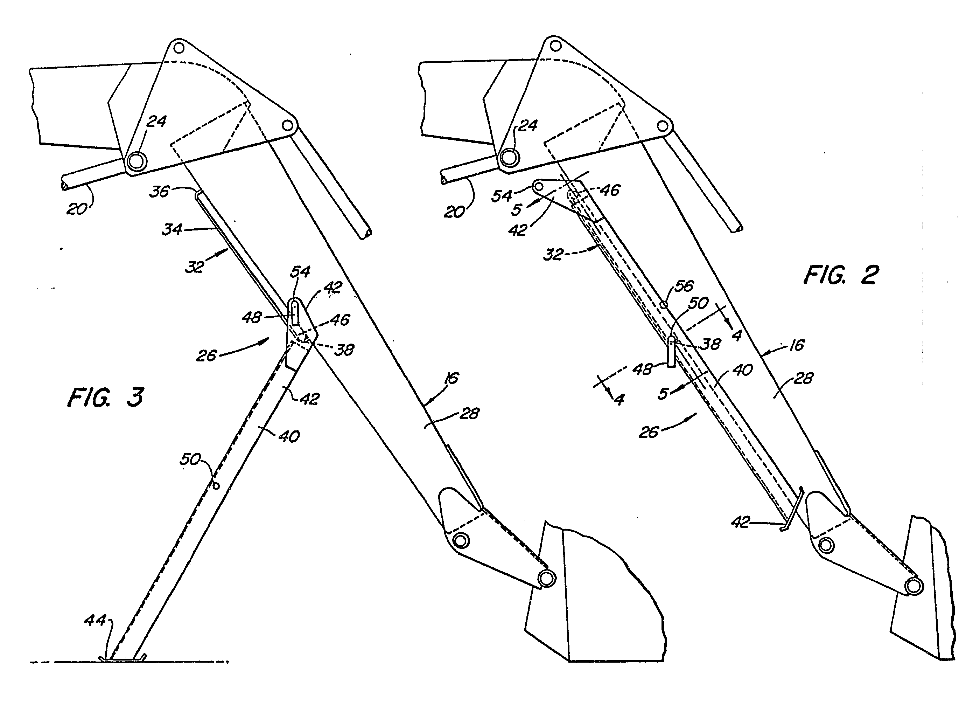

Figur 4 einen Schnitt gemäss der Linie IV–IV in Figur 2

Figur 6 einen Schnitt gemäss der Linie V–V in Figur 2 und

Figur 6 in isometrischer Darstellung eine Schiebeführung.

Figur 1 zeigt einen typischen Traktor 10 mit einem typischen Frontlader 12. Letzterer weist eine Schaufel 14 auf, von der sich ein Paar Rahmenteile oder Hubarme 16 nach hinten erstrecken zu lösbaren Schwenkverbindungen 18 mit dem Traktor. Zum Anheben bzw. Absenken der Hubarme ist auf jeder Seite des Traktors jeweils ein Hydraulikzylinder 20 vorgesehen, der sowohl vom Traktor als auch von den Hubarmen 22, 24 gelöst werden kann.

Für jeden Hubarm ist eine Abstützeinrichtung 26 vorgesehen, die identisch ausgebildet sind, so dass nachfolgend nur eine derartige Einrichtung beschrieben wird. Die strichpunktierte Darstellung in Figur 1 zeigt die Abstützeinrichtung in Abstützstellung, in der die Ladeeinrichtung oder ein vergleichbares Arbeitsgerät, das vom Traktor an den Anlenkstellen 18, 22 und 24 gelöst ist, einerseits von der Schaufel oder einem vergleichbaren Geräteteil auf dem Boden und andererseits von der Abstützeinrichtung abgestützt wird, die sich von der Schaufel nach hinten erstreckt und so eine übliche dreiecksförmige Abstützung bildet.

Das Rahmenteil bzw. der Hubarm 16 besteht in üblicher Weise aus einer stabilen, langgestreckten Konstruktion, vorzugsweise aus einem rechteckigen Kastenprofil gemäss Figur 4, und umfasst einen ansteigenden Rahmenabschnitt 28, der sich vom Geräteteil 14 nach hinten und oben erstreckt, sowie einen hochliegenden Rahmenabschnitt 30, der sich nach hinten zur Traktoranlenkung 18 erstreckt.

Insbesondere die Figuren 2, 3 und 6 lassen eine Schiebeführung 32 erkennen, die einen Boden 34 sowie ein oberes Ende 36 und ein unteres Ende 38 aufweist. Diese Schiebeführung ist fest an der rückwärtigen Seite des ansteigenden Rahmenabschnitts 28 bzw. des Hubarmes befestigt, beispielsweise durch Verschweissen, so dass der Boden 34 mit leichtem Abstand parallel zu dem genannten Rahmenabschnitt 28 liegt und sich dabei nach oben in Richtung auf den hochliegenden Rahmenabschnitt 30 erstreckt.

Die Abstützeinrichtung umfasst ferner eine Stützstrebe 40, die vorzugsweise einteilig ausgebildet ist und ein oberes Ende 42 sowie ein unteres Ende 44 aufweist, wobei letzteres als Stützplatte ausgebildet ist. Diese Stützstrebe besteht aus einem U-Profil und ist so ausgebildet, dass sie in eingefahrener Stellung den ansteigenden Rahmenabschnitt 28 von hinten zumindest teilweise umgreift (siehe Figur 4). Das obere Ende der Stützstrebe ist mit dem ansteigenden Rahmenabschnitt 28 über die Schiebeführung 32 verbunden. Ein als Querzapfen 46 ausgebildetes Führungsteil ertreckt sich durch die U-Schenkel der Stützstrebe sowie durch die Schiebeführung 32. Dadurch wird das obere Ende der Stützstrebe in der Schiebeführung gehalten und kann dort nach oben oder unten relativ gegenüber dem ansteigenden Rahmenabschnitt 28 verschoben sowie um den genannten Querzapfen 46 verschwenkt werden. Wird die Stützstrebe gegen den Hubarm 28 verschwenkt und nach oben bis zum oberen Ende der Schiebeführung verschoben, nimmt sie ihre eingefahrene bzw. Transportstellung gemäss Figur 2 ein, in der sie lösbar verriegelt ist durch einen L-förmigen Verriegelungszapfen 48, der durch miteinander fluchtende Bohrungen 50 in den U-Schenkeln der Stützstrebe sowie durch die Schiebeführung an deren unteren Ende 38 geschoben ist (siehe Figuren 2 und 4). Ein beliebiger Splint 52 dient zur Sicherung des Verriegelungszapfens. In dieser eingefahrenen Stellung wird also die Stützstrebe durch das als Querzapfen 46 ausgebildete Führungsteil sowie durch den Verriegelungszapfen 48 fest an der Schiebeführung gehalten und kann weder verschoben noch verschwenkt werden.

Das obere Ende 42 der Stützstrebe 40 wird durch ein Paar Ansätze gebildet, die miteinander fluchtende Bohrungen 54 zur Aufnahme des Verriegelungszapfens 48 aufweisen, wenn die Stützstrebe ihre Abstützstellung einnimmt. Um in diese Stellung zu gelangen, wird die Stützstrebe nach unten geschoben, wobei ihr Querzapfen 46 innerhalb der Schiebeführung 32 nach unten gleitet, bis er an deren unterem Ende 38 anschlägt. Wird die Stützstrebe nun nach hinten verschwenkt, gelangen die Bohrungen 54 mit den Bohrungen 56 in den Seiten des Hubarmes 28 zur Deckung, so dass der durch diese Bohrungen hindurchgesteckte Verriegelungszapfen 48 die Stützstrebe sowohl gegen Verschwenkung als auch gegen eine Verschiebung nach oben sichert. Die Stützstrebe bildet also eine starre Stütze, die sich mit ihrem unteren Ende 44 im rückwärtigen Abstand zur Schaufel 14 auf dem Boden abstützt.

Durch Unachtsamkeit wäre es möglich, dass die Stützstrebe 40 nach Herausziehen des Verriegelungszapfens 48 aus seiner Stellung gemäss Figur 2 innerhalb der Schiebeführung 32 schnell nach unten rutscht und unter Einwirkung der Schwerkraft ebenso schnell nach rückwärts verschwenkt und dadurch vielleicht eine Bedienungsperson verletzt. Um dies zu verhindern, ist zusätzlich zu dem Verriegelungszapfen 48 noch eine weitere Verriegelungseinrichtung vorgesehen, die in den Figuren 5 und 6 dargestellt ist. Demnach weist der Boden 34 der Schiebeführung 32 in seinem unteren Ende zwei sich gegenüberliegende Ausschnitte 58 auf, während die Stützstrebe 40 an ihrem oberen Ende 42 mit zwei sich gegenüberliegenden, zapfenförmig ausgebildeten Nasen 60 bestückt ist. Befindet sich die Stützstrebe in ihrer oberen bzw. eingezogenen Stellung, liegen die genannten Nasen 60 gegen den Boden 34 der Schiebeführung an und verhindern so ein Verschwenken der Stützstrebe nach unten. Wird der Verriegelungszapfen 48 herausgezogen, kann die Stützstrebe nach unten rutschen. Erfolgt diese Verschiebung unkontrolliert von einer Bedienungsperson, so rutscht die Stützstrebe bis zum unteren Ende 38 der Schiebeführung, wobei die Nasen 60 über die Ausschnitte 58 hinweg gleiten um anschliessend wieder die vorstehend genannte Verriegelung herbeizuführen. Die Nasen 60 können nur dann durch die Ausschnitte 58 hindurchtreten, wenn die Bedienungsperson die nach unten gerichtete Verschiebung der Stützstrebe genau dann abstoppt, wenn sich die Nasen 60 in Deckung mit den Ausschnitten 58 befinden. Nur in dieser Stellung kann die Verschwenkung der Stützstrebe erfolgen. Umgekehrt muss die Stützstrebe zur Einnahme ihrer eingezogenen Stellung angehoben und so weit nach oben geschoben werden, bis die Nasen 60 mit den Ausschnitten 58 zur Deckung gebracht sind.

**Patentansprüche**

1. Abstützeinrichtung (26) für ein von einem Traktor (10) abbaubares Arbeitsgerät (12) –, z.B. eine Schaufel (14) mit Hubarmen (16) –, das ein auf dem Boden abstellbares Geräteteil (14) sowie zumindest einen mit diesem verbundenen Hubarm (16) aufweist, der sich mit einem ansteigenden Rahmenabschnitt (28) vom Geräteteil (14) nach hinten und oben und mit einem hochliegenden Rahmenabschnitt (30) über den Boden erstreckt und bei vom Traktor abgebautem und auf dem Boden abgestellten Arbeitsgerät (12) von der Abstützeinrichtung (26) im Abstand über dem Boden gehalten wird, wobei die Abstützeinrichtung (26) noch folgende Merkmale aufweist:

– Im Bereich des hochliegenden Rahmenabschnittes (30) ist eine Schiebeführung (32) für eine Stützstrebe (40) vorgesehen;

– die Stützstrebe (40) ist mit ihrem oberen Ende (42) über ein Führungsteil (46) so in der Schiebeführung (32) festgelegt, dass sie hochgeschoben und in eine eingefahrene Stellung verschwenkt werden kann, in der das untere Ende (44) der Stützstrebe (40) vom Boden frei ist, oder aber dass die Stützstrebe (40) nach unten geschoben und nach hinten in eine Abstützposition verschwenkt werden kann, in der das untere Ende (44) der Stützstrebe (40) in rückwärtigen Abstand von dem genannten Geräteteil (14) auf dem Boden aufliegt;

– es ist eine lösbare Verriegelungseinrichtung (48, 52) zur Verriegelung der Stützstrebe (40) in einer der beiden genannten Stellungen vorgesehen;

dadurch gekennzeichnet, dass die Schiebeführung (32) an dem ansteigenden Rahmenabschnitt (28) des Hubarmes (16) neben dessen hochliegendem Rahmenabschnitt (30) sitzt, und die Stützstrebe (40) nach vorn zur Anlage an den ansteigenden Rahmenabschnitt (28) in die eingefahrene Stellung verschwenkbar bzw. in der Schiebeführung (32) nach unten verschiebbar und von dem ansteigenden Rahmenabschnitt (28) wegschwenkbar ist, wobei die Verriegelungseinrichtung (48, 52) einen herausziehbaren Verriegelungszapfen (48) aufweist, der bei eingefahrener Stellung der Stützstrebe (40) eine Steckverbindung zwischen Stützstrebe und unterem Abschnitt der Schiebeführung (32) und bei Abstützstellung der Stützstrebe zwischen dieser und dem ansteigenden Rahmenabschnitt (28) herstellt.

2. Abstützeinrichtung nach Anspruch 1, gekennzeichnet durch eine zusätzliche lösbare Verriegelungseinrichtung (58, 60), die ein Verschwenken der Stützstrebe (40) aus ihrer eingefahrenen Stellung so lange verhindert, bis die Stützstrebe über eine vorbestimmte Länge in der Schiebeführung (32) nach unten geschoben ist.

3. Abstützeinrichtung nach Anspruch 2, dadurch gekennzeichnet, dass die Schiebeführung (32) einen Boden (34) aufweist, der in seinem unteren Abschnitt mit einem Ausschnit (58) versehen ist, und dass die Stützstrebe (40-) eine Nase (60) aufweist, die beim Herunterschieben der Stützstrebe (40) am Boden (34) der Schiebeführung (32) bis zum Erreichen des Ausschnittes (58) entlang gleitet, durch diesen Ausschnitt nach unten austritt und so die Verschwenkung der Stützstrebe nach hinten ermöglicht.

4. Abstützeinrichtung nach Anspruch 3, gekennzeichnet durch zwei sich im Boden (34) der Schiebeführung (32) gegenüberliegende Ausschnitte (58) für zwei sich entsprechend gegenüberliegende Nasen (60) der Stützstrebe (40).

5. Abstützeinrichtung nach einem der Ansprüche 3 oder 4, dadurch gekennzeichnet, dass die Schiebeführung (32) in Seitenansicht U-förmig ausgebildet und mit ihrem oberen und unteren, durch die U-Schenkel gebildeten Ende (36, 38) so an der rückwärtigen Seite des ansteigenden Rahmenabschnitts (28) befestigt ist, dass der langgestreckte, durch den U-Steg gebildete Boden (34) mit lichtem Abstand parallel zum genannten Rahmenabschnitt (28) liegt, wobei sich das als Querzapfen (46) ausgebildete Führungsteil der Stützstrebe (40) durch deren oberes Ende (42) und durch den genannten lichten Abstand zwischen dem ansteigenden Rahmenabschnitt (28) und dem Boden (34) der Schiebeführung (32) erstreckt.

6. Abstützeinrichtung nach einem der vorhergehenden Ansprüche, dadurch gekennzeichnet, dass die Stützstrebe (40) einen U-förmigen Querschnitt aufweist und in eingefahrener Stellung den ansteigenden Rahmenabschnitt (28) von hinten zumindest teilweise umgreift.

## Claims

Parking stand means (26) for a tractor-dismountable implement (12) – e.g. a bucket (14) with lift arms (16) –, having a part (14) adapted to rest on the ground and at least one lift arm (16) connected to said part and having an uphill portion (28) extending rearwardly away from the part (14) and an elevated portion (30) above the ground; said parking stand means (26) for supporting the elevated portion (30) of said part (14) above the ground when said tractor-dismounted implement (12) rests on the ground, further comprising the following features:
- In the area of the elevated portion (30) slide means (32) for a strut-like support (40) is provided;
- the strut-like support (40) is fixed in its slide means (32) with its upper end (42) by means of a guide member (46) for uphill movement and for swinging in a retracted position, in which the lower end (44) of said support (40) is clear of the ground, or, however, for downhill movement and for rearward swinging in a parking position, in which the lower end (44) of said support (40) rests on the ground in a rearwardly spaced relationship of said part (14);
- releasable means (48, 52) for selectively loking said support (40) in either of said positions;
characterized in that said slide means (32) is positioned at the uphill portion (28) of said lift arm (16) adjacent to its elevated portion (30), and that said strut-like support (40) is tiltable forwardly toward and adjacent to the uphill portion (28) to occupy a retracted position or is movable downhill in the slide means (32) and is tiltable away from the uphill portion (28), whereby said releasable means (48, 52) comprises a removable pin (48) selectively connectable between the support (40) and the downhill portion of the slide means (32) in the retracted positon of the support and between the support and the uphill portion (28) in the parking position of the support.

2. The parking stand means of claim 1, including additional release means (58, 60) for preventing swinging of the support (40) away from its retracted position until the support is moved downhill in the slide means (32) through a predetermined range.

3. The parking stand means of claim 2, in which the slide means (32) has a bottom (34) provided with a notch (58) in a downhill portion thereof and the support (40) has a projection (60) slidable along the bottom (34) until the projection (60) registers with the notch (58) and passes downwardly therethrough to enable rearward swinging of the support.

4. The parking stand means of claim 3, including a pair of notches (58) transversely aligned in the slide means bottom (34) and a pair of like transversely aligned projections (60) of the support (40).

5. The parking stand means of claim 3 or 4, in which the slide means (32) shows in side view a U-shape and is secured to the rear of the uphill portion (28) with its uphill and downhill ends (36, 38) forming the U-legs in such a way that the elongated uphill bottom (34) forming the U-web lies parallel to and spaced from said uphill portion (28), and the guide is a cross pin (46) passing through the upper end (42) of the support (40) and through said space between the uphill portion (28) and the slide means bottom (34).

6. The parking stand means of one of the preceding claims, wherein the support (40) has a U-cross section so as to at least partly embrace the uphill portion (28) from the rear when in a retracted position.

## Revendications

1. Dispositif d'appui formant béquille (26) pour équipement de travail (12) pouvant être séparé d'un tracteur (10), par exemple pour un godet (14) équipé de bras de relevage (16), qui comprend une partie formant outil (14) pouvant être déposée sur le sol ainsi qu'au moins un bras de relevage (16) relié à la partie précédente, qui s'étend vers l'arrière et vers le haut par une partie de châssis ascendante (28) depuis la partie formant outil (14), et au-dessus du sol par une partie de châssis supérieure (30), ledit équipement (12) étant, lorsqu'il est séparé du tracteur et déposé sur le sol, maintenu à une certaine distance au-dessus du sol par le dispositif d'appui formant béquille (26), ce dispositif d'appui (26) présentant encore les particularités suivantes:
- il est prévu dans la zone de la partie de châssis supérieure (30) un guide formant coulisse (32) destiné à une béquille (40);
- la béquille (40) est retenue par son extrémité supérieure (42) par un élément de guidage (46), dans le guide formant coulisse (32) de façon telle qu'elle puisse être délacée vers le haut par coulissement et basculée vers l'avant dans une position rentrée, dans laquelle l'extrémité inférieure (44) de la béquille (40) se trouve à l'écart du sol, ou bien que la béquille (40) puisse être déplacée par coulissement vers le bas et basculée vers l'arrière dans une position d'appui dans laquelle l'extrémité inférieure (44) de cette béquille (40) repose sur le sol à une certaine distance en arrière de la partie formant outil mentionnée (14);

– un dispositif de verrouillage dégageable (48, 52) est prévu pour le verrouillage de la béquille (40) dans l'une des deux positions mentionnées;

caractérisé en ce que le guide formant coulisse (32) se trouve sur la partie de châssis ascendante (28) du bras de relevage (16), à côté de sa partie de châssis supérieure (30), et en ce que la béquille (40) peut pivoter vers l'avant en vue de son application contre la partie de châssis ascendante (28) en position rentrée, ou bien peut coulisser vers le bas dans le guide formant coulisse (32) et peut être basculée à l'écart de la partie de châssis ascendante (28), le dispositif de verrouillage (48, 52) comportant une broche de verrouillage dégageable qui, dans la position rentrée de la béquille (40), établit une liaison par enfichage entre la béquille et la partie inférieure du guide formant coulisse (32), tandis que dans la position d'appui de la béquille elle établit une liaison par enfichage entre celle-ci et la partie de châssis ascendante (28).

2. Dispositif d'appui formant béquille suivant la revendication 1, caractérisé par un dispositif de verrouillage dégageable additionnel (58, 60) qui empêche un pivotement de la béquille (40) à partir de sä position rentrée jusqu'à ce que cette béquille ait été déplacée vers le bas par coulissement dans le guide formant coulisse (32) sur une distance prédéterminée.

3. Dispositif d'appui formant béquille suivant la revendication 2, caractérisé en ce que le guide formant coulisse (32) présente un fond (34) qui est muni dans sa partie inférieure d'une découpe (58), et en ce que la béquille (40) présente un bec ou ergot (60) qui, lors du coulissement vers le bas de la béquille (40), glisse le long du fond (34) du guide formant coulisse (32) jusqu'à ce qu'on ait atteint la découpe (58), pour sortir par celle-ci en direction du bas et permettre ainsi le pivotement vers l'arrière de la béquille.

4. Dispositif d'appui formant béquille suivant la revendication 3, caractérisé par deux découpes opposées (58) ménagées dans le fond (34) du guide formant coulisse (32) et destinées à deux ergots opposé de façon correspondante de la béquille (40).

5. Dispositif d'appui formant béquille suivant la revendication 3 ou 4, caractérisé en ce que le guide formant coulisse (32) a, quand on le regarde de profil, une forme en U et est fixé par ses extrémités supérieure et inférieure (36, 38) formées par les branches de l'U sur la face arrière de la partie de châssis ascendante (28) de façon telle que le fond allongé (34) formé par la branche de l'U, se trouve à une légère distance de la partie de châssis mentionnée (28) et parallèle à celle-ci l'élément de guidage en forme d'axe transversal (46) de la béquille (40) s'étendant à travers son extrémité supérieure (42) et traversant le faible intervalle mentionné ménagé entre la partie de châssis ascendante (28) et le fond (34) du guide formant coulisse (32).

6. Dispositif d'appui formant béquille suivant l'une quelconque des revendications précédentes, caractérisé en ce que la béquille (40) présente une section droite en forme d'U et entoure, en position rentrée, la partie de châssis ascendante (28) depuis l'arrière d'une façon au moins partielle.

FIG. 1

FIG. 4

FIG. 6

FIG. 5

FIG. 3

FIG. 2

0 042 608

9